# EUROPEAN PATENT APPLICATION

(11) **EP 2 913 639 A1**
(43) Date of publication of application: **02.09.2015**
(21) Application number: 14290053.9
(22) Date of filing: 27.02.2014
(51) Int. Cl.: G01D 21/00

(54) **Electronic device and method of operating an electronic device**

(71) Applicant: ALCATEL LUCENT, 92100 Boulogne-Billancourt (FR)
(72) Inventor: Valentin, Stefan, 70435 Stuttgart (DE); Dorling, Kevin, 70435 Stuttgart (DE)
(74) Representative: DREISS Patentanwälte PartG mbB

(57) **Abstract**

The invention relates to en electronic device (100), particularly sensor device, comprising a first interface (110) for receiving a control signal (CS) from a remote device (1000), a second interface (120) for transmitting an optical signal, wherein said device (100) is configured to transmit at least one optical signal (OS1) by means of said second interface (120) depending on a control signal (CS) received at said first interface (110).

## Description

### Field of the invention

The invention relates to an electronic device, particularly a sensor device, and to a method of operating such electronic device.

The invention also relates to a control device for an electronic device and a method of operating such control device.

### Background

It is well known to provide so-called Wireless Sensor Networks (WSNs) formed by a large number of electronic devices of the aforementioned type, wherein at least some of these devices are equipped with one or more sensors. These so-called wireless sensor nodes are typically equipped with sensors to measure environmental properties (e.g., temperature, air pressure, sound, vibration, radiation) and with a simple wireless transceiver to deliver the measurements to a sink. To achieve large runtimes on battery and to enable dense measurements at feasible costs, the sensors are designed for high energy efficiency and low cost per unit.

To deploy large WSNs at low cost, large quantities of sensor nodes can be deployed instantly and at low accuracy. This is e.g. obtained by aerial deployment and/or by drive-by deployments on land or sea. With both deployment methods, the nodes' locations are known at very low precision only and may even change after the deployment (e.g., when nodes start to drift or roll). However, an accurate localization of sensor nodes is imperative for the network's maintenance and for its application. Without accurate sensor locations, it is neither possible to measure a parameter over a precisely defined area nor to find and repair nodes that have failed.

Hence, it is important to determine the sensor nodes' positions with high accuracy.

Known approaches e.g. comprise the use of satellite navigation systems (e.g., GPS (Global Positioning System)), which would deliver the required localization accuracy but is not practically applicable due to the comparatively high device cost and energy consumption. Although a GPS chip would be only occasionally activated, it requires a comparatively long initialization time for acquiring the first position. Consequently, solutions based on recent GPS chips are initially slow and require a considerable amount of electric energy.

A further known approach for localizing electronic devices or sensor nodes in the field comprises triangulation, which are geometrical techniques based on a measured strength of a radio signal received from said electronic devices. This requires accurate antennas and receiver circuits, which are usually not available on the sensor nodes. Due to the desired low price of electronic devices for large WSNs, the engineering tolerance is rather high which leads to a large fluctuation of measurement accuracy among the devices. Moreover, the used transceiver chipsets only allow to measure a small number of signal strength levels, i.e. offer low granularity of strength level measurements. For instance, according to applicant's information, exemplary systems based on a widely-used low-power radio frequency (RF) transceiver chip of Atmel Corporation (type AT86RF230) have a received signal strength tolerance of +/- 5 dB and a resolution of 1 dB per value, which is usually not sufficient for the targeted localization accuracy of the conventional triangulation and/or trilateration approach.

A further known approach for localizing electronic devices or sensor nodes in the field comprises using a "List of Closest Neighbors", wherein a node estimates its own location from receiving identifiers and signal strength of neighboring nodes with known positions. While this method works for medium accuracy in cellular networks it is inappropriate for WSNs where only few nodes with known positions are available, a transmit range is small (typically below 100 m), signal strength cannot be accurately measured due to low-cost hardware. The first two restrictions make it unlikely that a node will overhear a sufficient number of anchor signals from neighboring nodes with known position ("anchor nodes"). Even if this should be the case, the third restriction makes it difficult to estimate the distance from the node towards the anchor nodes.

A further known approach for localizing electronic devices or sensor nodes in the field comprises trilateration and/or Time-Division-of-Arrival (TDOA), which refers to a set of localization methods based on measuring propagation time of the radio signal and/or the time differences between signals received by a number of anchor nodes. Despite the lack of anchor nodes in many scenarios, these methods rely on strict time synchronization among the anchors. With low-cost sensor nodes, this is not possible due to the lack of a low-latency link for accurate time synchronization over the network and due to the high jitter of typical local real time clocks.

### Summary

In view of these conventional approaches, it is an object of the present invention to provide an improved electronic device, which may particularly be used as a sensor node, and which avoids the disadvantages of prior art. It is a further object of the present invention to provide an improved method of operating such an electronic device.

It is a further object of the present invention to provide an improved control device and an improved method of operating such control device.

Regarding the abovementioned electronic device, said object is achieved by said electronic device comprising a first interface for receiving a control signal from a remote device, a second interface for transmitting an optical signal, wherein said device is configured to transmit at least one optical signal by means of said second interface depending on a control signal received at said first interface. Thus, advantageously, the electronic device can be triggered by means of said control signal to transmit an optical signal which enables efficient detection and/or localization of said electronic device. According to one embodiment, a control device may be provided which transmits said control signal to the electronic device, and which provides for optical detecting means such as an imaging system to capture an optical signal emitted or transmitted by said electronic device e.g. upon receipt of said control signal. Thus, by evaluating so captured optical signals, for example in form of digital images, which inter alia comprise the optical signal of the electronic device, the electronic device may efficiently be located. Further advantageously, since the transmission of the optical signal may be synchronized to, i.e. performed depending on, said control signal, according to an embodiment, the electronic device is only required to transmit said optical signal for a comparatively short period of time, whereby electric energy can be saved.

According to an embodiment, said device is configured to transmit at least one optical signal within a predetermined time interval after reception of said control signal. Thus, for detecting said at least one optical signal of the electronic device, only the predetermined time interval has to be considered for a corresponding device, i.e. a control device provided for detecting the optical signal of the electronic device. For example, a start time of said predetermined time interval may be commonly known to both the electronic device and the control device which is provided for detecting the optical signal of the electronic device and for localizing said electronic device. Alternatively, or in addition, an end time of the predetermined time interval may also be commonly known by both devices. According to a further embodiment, it is also possible to provide information regarding the predetermined time interval within said control signal, i.e. by a correspondingly modulated control signal. Thus, an electronic device receiving said control signal can determine specific parameters of the determined time interval, and thus the electronic device may schedule its own transmission of the optical signal depending on an evaluation of the control signal.

According to a further embodiment, said first interface comprises a radio interface configured to receive and/or transmit radio frequency, RF, signals. Although a radio interface is preferred as the first interface for the electronic device, i.e. for receiving the control signal which may e.g. be used to trigger a transmission of an optical signal by the electronic device, other types of interface technologies may also be provided. For example, according to a further embodiment, the first interface may also comprise an optical interface. Thus, the electronic device may receive optical control signals. Likewise, an acoustic interface, for example capable of receiving and/or transmitting sound, particularly infrasound and/or ultrasound, may be provided. Generally, any interface technology may be provided which enables a wireless transmission of a control signal and which can be processed by the electronic device according to the embodiments, preferably in an energy efficient manner. According to a further embodiment, said first interface of the electronic device comprises a radio interface, wherein said radio interface may also be used by the electronic device to exchange data with further electronic devices of same or different type. According to a particularly preferred embodiment, a radio interface according to IEEE 802.15 standard using a 2.4GHz ISM band may be provided at the electronic device. This ensures efficient device-to-device communication as required by wireless sensor networks in a per se known manner. Furthermore, this radio interface may also be used for receiving control signals or the like from a control device which is e.g. used to trigger the electronic device to transmit its optical signals for localization purposes. According to a further embodiment, two RF interfaces may be provided at the electronic device, wherein a first one is used for receiving a control signal according to the embodiments, and wherein a second may be used for device-to-device communication.

According to a further embodiment, said second interface is configured to transmit said optical signal with at least one spectral component within a visual wavelength band, which particularly ranges from about 380 nanometer to about 780 nanometer and/or within an infrared wavelength band which particularly ranges from about 780 nanometer to about 1 millimeter and/or within an ultraviolet wavelength band which particularly ranges from about 380 nanometer to about 200 nanometer, wherein said second interface preferably comprises one or more light sources of a semiconductor type, for example one or more light emitting diodes. Alternatively or in addition, other types of light sources may also be used.

According to an embodiment, different wavelengths may also be used to distinguish between different electronic devices. I.e., a first type of electronic device according to the embodiments may be equipped with a semiconductor light source such as a light emitting diode (LED) that is capable of transmitting an optical signal at a first wavelength range, wherein further types of electronic devices according to the embodiments are equipped with other light emitting diodes and the like. Also, it may be beneficial to employ optical signals with a wavelength outside of the range of visible wavelengths. Particularly, in a preferred embodiment, infrared optical signals may be employed because many optical imaging sensors comprise a particularly high sensitivity to infrared wavelengths ranges, whereby efficient detection of the optical signals is ensured.

According to a further embodiment, said second interface may comprise a beamforming unit, especially a focusing unit, for example a focusing lens, which is configured to shape a beam of an optical signal emitted by a light source of said second interface.

According to a further embodiment, said device is configured to evaluate said control signal for at least one command comprised therein. Thus, the electronic device receiving such control signal can e.g. receive and use further information provided by the control device that has emitted the control signal. As already mentioned above, for example, additional information regarding a predetermined time interval within which an optical signal has to be transmitted by the electronic device may be comprised in the control signal. However, the control signal may also comprise further instructions from the control device, such as requests for a type of the specific electronic device. In these cases, an electronic device according to the embodiments which has received and evaluated such request may transmit the aforementioned optical signal for localization purposes. Additionally or alternatively thereto, the electronic device may transmit a further optical signal, preferably a modulated optical signal, which carries information on the type of the electronic device which is currently transmitting thus responding to the request comprised in the control signal.

According to a further embodiment; said device is configured to transmit a modulated optical signal in response to said control signal, wherein said modulated optical signal preferably comprises information on at least one operational parameter of said device or data, for example sensor data, captured by said device.

A further solution to the object of the present invention is provided by a control device for an electronic device, particularly for an electronic device according to the embodiments, wherein said control device comprises a primary interface for transmitting a control signal to said electronic device, an imaging device for capturing one or more optical signals from said electronic device, wherein said imaging device is configured to capture at least one image depending on a control signal transmitted by said primary interface. Thus, assuming that at least one electronic device according to the embodiments as explained above is present in a geographic region in which an image is captured by the control device according to the embodiments, it is ensured that an optical signal as e.g. emitted by the electronic device upon receipt of the control signal from the control device will be present on the captured image, whereby a localization of the respective electronic device can be made depending on said captured image.

According to an embodiment, said imaging device is configured to capture at least one image within a predetermined time interval after transmission of said control signal. Thus, it is ensured that with a high probability the captured image comprises a comparatively high degree of information relating to the optical signals from the electronic devices, which have transmitted the optical signals in response to receiving a respective control signal from the control device. In other words, the electronic devices and their process of transmitting optical signals is efficiently synchronized with the emission of the control signal from the control device and the capturing of at least one image by the control device. Thus, it is ensured that the electronic devices are required to activate their optical transmitters for a comparatively short time only, thus contributing to energy savings, and furthermore, only a comparatively small amount of image data that has been captured by the control device or its imaging device, respectively, is to be evaluated for localizing one or more electronic devices.

According to a further embodiment, said control device is configured to associate said at least one image with geographic coordinates. In this context, associating said at least one image with geographic coordinates for example comprises storing together with the captured image information on geographic coordinates that define the area which is covered by the image. Thus, an efficient localization of electronic devices is enabled. For example, according to one embodiment, the control device may be configured to store geographic coordinates which correspond to the four corners of a captured image, whereby by means of simple interpolation, any pixel of said image may be evaluated as to its actual geographical coordinates. Alternatively or in addition, said associating step may also comprise determining a position of the control device or its imaging device at the time where the image is captured. This can e.g. be attained by conventional GPS systems or the like, whereby the precision of the localization of electronic devices is further increased. Note that according to some embodiments, the control device may be co-located with its imaging device. For example, a control device comprising the imaging device and/or the control signal transmitter may be comprised in a single, common casing. Such control device may e.g. be mounted to a vehicle, preferably an air vehicle such as a manned air vehicle or even an unmanned air vehicle (UAV). Alternatively, according to further embodiments, the various components (transmitter, imaging device) of the control device are not necessarily required to be collocated. For instance, the interface or the transmitter for transmitting the control signal, respectively, may be located at a first position, either stationary or in any vehicle or the like, and the imaging device may be located in a second position, which is different from the first position. Also in these scenarios, the imaging device may either be stationary or mobile, i.e. mounted to an air vehicle or the like. In any case, it is beneficial if the operation of the imaging device and the first interface of the control device can be synchronized.

A further solution to the object of the present invention is provided by a method of operating an electronic device, particularly sensor device, comprising a first interface for receiving a control signal from a remote device, a second interface for transmitting an optical signal, wherein said device transmits at least one optical signal by means of said second interface depending on a control signal received at said first interface.

According to a further embodiment, said device transmits at least one optical signal within a predetermined time interval after reception of said control signal.

According to a further embodiment, said device evaluates said control signal for at least one command comprised therein and/or transmits a modulated optical signal in response to a control signal, wherein said modulated optical signal preferably comprises information on at least one operational parameter of said device or data, for example sensor data, captured by said device.

A further solution to the object of the present invention is provided by a method of operating a control device for an electronic device, particularly for an electronic device according to the embodiments, wherein said control device comprises a primary interface for transmitting a control signal to said electronic device, an imaging device for capturing one or more optical signals from said electronic device, wherein said imaging device captures at least one image depending on a control signal transmitted by said primary interface.

According to an embodiment, said imaging device captures at least one image within a predetermined time interval after transmission of said control signal.

According to a further embodiment, said control device associates said at least one image with geographic coordinates.

According to a further embodiment, the method further comprises the following steps: deploying at least one electronic device, preferably according to the embodiments, in a predetermined geographic region by terrestrial and/or aerial deployment, roaming within said predetermined geographic region, wherein said roaming comprises transmitting one or more control signals to said at least one electronic device, preferably by means of a control device according to the embodiments, and capturing at least one image of said predetermined geographic region.

A further solution to the object of the present invention is provided by an air vehicle comprising at least one control device according to the embodiments. Advantageously, the air vehicle may in a first step e.g. be used to deploy a number of electronic devices according to the embodiments, for example by flying over a predetermined geographic region and by dropping the electronic devices in a specific target area. After that, preferably after a predetermined waiting time, the air vehicle may fly over the same geographic region for at least one further time, and the localization process according to the embodiments may be started by transmitting one or more control signals which trigger the electronic devices in the specific geographic region to transmit their optical signals. Correspondingly, the control device on board of the air vehicle has to capture one or more images to receive the optical transmission of the electronic devices. When associating the captured images with geographical data such as a current position of the air plane, geographic coordinates of specific portions of the captured image data, and the like, an efficient determination of the precise geographic location of the deployed electronic devices is possible. The localization may according to one embodiment be carried out in real-time, i.e. upon receiving the captured image data. According to a further embodiment, the captured image data together with its associated geographic coordinate information may also be stored for later evaluation.

### Brief description of the figures

Further features, aspects and advantages of the present invention are given in the following detailed description with reference to the drawings in which:
- Figure 1: schematically depicts an electronic device according to an embodiment,
- Figure 2: schematically depicts a block diagram of a control device according to an embodiment,
- Figure 3: schematically depicts an operational scenario according to an embodiment,
- Figure 4a, 4b: schematically depict further operational scenarios according to an embodiment,
- Figure 5a: depicts a simplified flow-chart of a method according to the embodiments,
- Figure 5b: depicts a simplified flow-chart of a method according to the embodiments,
- Figure 5c: depicts a simplified flow-chart of a method according to the embodiments,
- Figure 6: schematically depicts aspects of a control procedure according to an embodiment,
- Figure 7: schematically depicts a control process at a sensor node according to an embodiment, and
- Figure 8: schematically depicts a frame structure according to an embodiment.

### Description of the embodiments

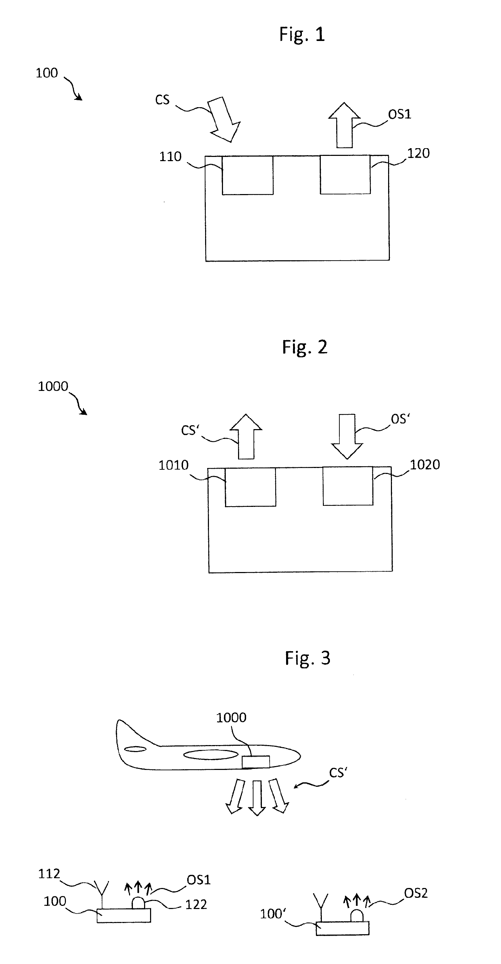

Figure 1 schematically depicts an electronic device 100. The electronic device 100 comprises a first interface 110 for receiving a control signal CS from a control device 1000 (cf. figure 3). The electronic device 100 further comprises a second interface 120 for transmitting an optical signal OS1.

According to the present embodiment, the device 100 is configured to transmit at least one optical signal OS1 by means of said second interface 120 depending on a control signal CS received at said first interface 110. For example, the electronic device 100 is configured to transmit said optical signal OS1 upon receipt of said control signal CS or within a predetermined time after receipt of said control signal CS.

According to an embodiment, the electronic device 100 may be a wireless sensor node which comprises additional sensor devices (not shown). During regular operation of the wireless sensor node 100, it can collect sensor data in a per se known manner and e.g. forward said sensor data to other wireless sensor devices of the same or different type, for example by means of said first interface 110. For visually/optically localizing said electronic device 100, a control device 1000 (figure 3) may be provided which transmits at least one control signal CS. Upon receipt of the control signal CS the electronic device 100 transmits an optical signal OS1 by means of its second interface 120, wherein said optical signal OS1 may be detected by the control device 1000 or an associated advice, whereby a localization of the electronic device 100 may be performed.

According to a preferred embodiment, the first interface 110 is a radio frequency interface, for example according to the IEEE 802.15 standard which uses e.g. a 2.4 GHz ISM frequency band. This radio interface may be used for inter-sensor device communication, i.e. for communication with other sensor devices or electronic devices 100 of same or different type. The interface 110 may also be used for receiving the control signal CS from the control device 1000.

According to a further embodiment, said second interface 120 is configured to transmit said optical signal OS1 with at least one spectral component within a visual wavelength band, which particularly ranges from about 380 nanometer to about 780 nanometer and/or within an infrared wavelength band which particularly ranges from about 780 nanometer to about 1 millimeter and/or within an ultraviolet wavelength band which particularly ranges from about 380 nanometer to about 200 nanometer, wherein said second interface 120 preferably comprises one or more light sources of a semiconductor type, for example one or more light emitting diodes.

According to a further embodiment, the electronic device 100 is configured to analyze the control signal CS. I.e., instead of simply reacting to the receipt of the control signal CS in the form of transmitting the optical signal OS1, according to an embodiment, the electronic device 100 may also analyze or evaluate the control signal CS for the presence of at least one command which has been integrated into the control signal by a control device 1000. Such commands may e.g. notify the electronic device to indicate its device type or to transmit sensor data to the control device or the like. According to an embodiment, this may be attained by the electronic device 100 modulating a corresponding optical signal, which may be e.g. be transmitted upon receipt of the control signal CS comprising a corresponding command. I.e., according to an embodiment, upon receipt of the control signal CS the electronic device 100 may within a predetermined time transmit the optical signal OS1 which may e.g. be an unmodulated optical signal thus merely indicating a position of the electronic device 100. In addition to this optical signal OS1 a modulated optical signal may also be transmitted by the electronic device 100 which comprises the requested information. The control device 1000 may receive said optical signals and thus also the information comprised therein from the electronic device 100.

Generally, at least one operational parameter of the electronic device 100 or sensor data or the like may be transmitted to a further device by using optical signals which can be emitted by means of the second interface 120 of the electronic device 100.

Figure 2 depicts a control device 1000 according to an embodiment. The control device 1000 comprises a primary interface 1010 for transmitting a control signal CS' to an electronic device 100, e.g. an electronic device 100 according to the embodiments. The control signal CS' depicted by Fig. 2 may e.g. be identical to the control signal CS depicted by Fig. 1. The control device 1000 further comprises an imaging device 1020 for capturing one or more optical signals OS' from an electronic device 100 according to the embodiments.

The imaging device 1020 is configured to capture at least one image depending on a control signal CS' transmitted by said primary interface 1010. According to a preferred embodiment, the imaging device 1020 is configured to capture at least one image within a predetermined time interval after transmission of said control signal CS'.

For example, when localizing electronic devices 100 according to an embodiment, the control device 1000 may transmit a first control signal CS', which is received as the control signal CS as depicted by figure 1 by an electronic device 100. Upon receipt of the control signal CS, the electronic device 100 transmits an optical signal OS1 for reception by the control device 1000. An optical signal OS', which may represent the optical signal OS1 as transmitted by the electronic device 100 in its form received at the control device 1000 is received by the control device 1000 or its imaging device 1020 for example.

According to a preferred embodiment, the imaging device 1020 comprises at least one digital camera system comprising an optical sensor device such as a charge coupled device (CCD) or a CMOS (complementary metal oxide semiconductor) imaging sensor.

According to a preferred embodiment, the control device 1000 is configured to associate said at least one image with geographic coordinates. The geographic coordinates may e.g. be determined by the control device 1000, e.g. by means of an integrated GPS system or the like. According to a further embodiment, the imaging device 1020 may also be configured to choose a field of view for capturing the image such that at least one element of a target area to be captured comprises known geographic coordinates. This may e.g. be attained by choosing the field of view of the imaging device 1020 such that a well-known geographic reference coordinate point is comprised within the image. Alternatively, or in addition, the field of view of the imaging device 1020 may be chosen such that specific pixels of the captured image correspond with known geographic coordinates which may e.g. be attained by calibrating and adjusting the optical axis of the imaging device 1020 prior to capturing the image.

Evidently, the step of associating said at least one image with geographic coordinates may be performed in real-time, i.e. prior or during capturing of said image, or in non-real-time, i.e. even after capturing said image by determining elements with known geometric coordinates within captured image.

Figure 3 schematically depicts an operational scenario according to an embodiment. An air vehicle is equipped with a control device 1000 according to an embodiment. The air vehicle flies over a geographical region in which two electronic devices 100, 100' according to the embodiments are deployed. Both electronic devices 100, 100' which may e.g. be configured as wireless sensor nodes, comprise an antenna 112 for the radio frequency interface 110 and a semiconductor light source such as a light emitting diode (LED) 122 for transmitting an optical signal OS (figure 1). Optionally, according to an embodiment, the LED 122 may comprise a focusing unit (not shown) such as e.g. a lens for focusing the emitted light.

Upon receiving the control signal CS' as transmitted by the control device 1000 from the air vehicle, within a predetermined time, the sensor nodes 100, 100' each transmit an optical signal OS1, OS2 by means of their light emitting diodes. Presently, the first sensor node 100 emits an optical signal OS1 in a first wavelength range and the second sensor node 100' emits an optical signal OS2 in a second wavelength range so that the optical signals OS1, OS2 may be distinguished at the receiving control device 1000 by means of their wavelength ranges. The control device 1000, preferably also within the predetermined time interval, captures at least one image by means of its imaging device 1020 (figure 2) in order to capture the optical signals OS1, OS2. From the respective pixel position of the captured optical signals OS1, OS2 within the captured image, a precise localization of the electronic devices 100, 100' may be attained.

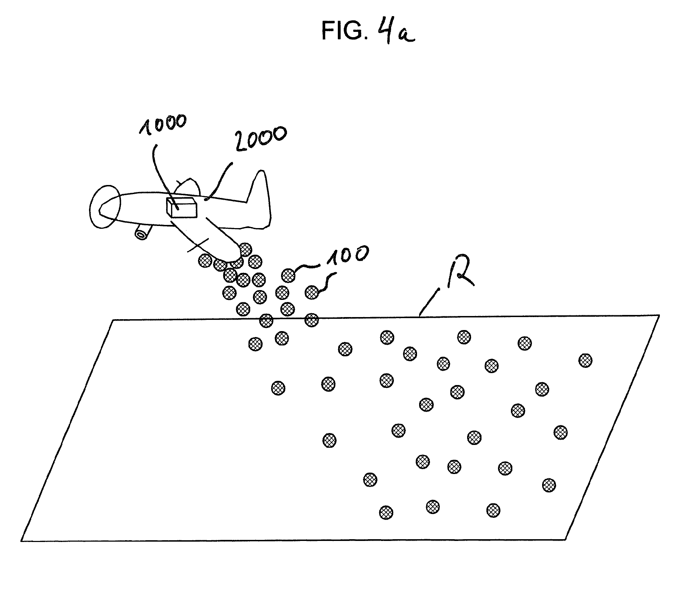

Fig. 4a shows an aerial deployment scenario, wherein an air vehicle 2000 comprises a control device 1000 and flies over a predetermined geographic range R while dropping a plurality of electronic devices 100 according to the embodiments.

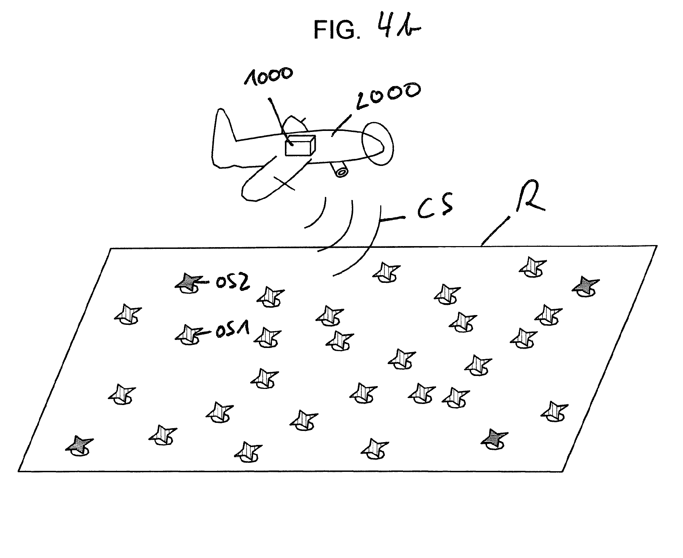

Figure 4b schematically depicts a further phase of the operation of the air vehicle 2000. After the dropped electronic devices 100 (figure 4a) have reached the ground of the geographic region R, the control device 1000 transmits a control signal CS as explained above. Thereby, the various sensor devices 100 are triggered to, preferably within a predetermined time interval upon receipt of said control signal CS, transmit respective optical signals OS1, OS2 which may, preferably simultaneously, be captured by the control device 1000 by means of the imaging device 1020 which captures one or more digital images of the geographic region R.

Thus, a so captured digital image comprises a plurality of pixels an intensity and/or color value of which depend on the respective optical signals OS1, OS2 transmitted by the electronic devices 100, whereby localization of the electronic devices 100 as positioned within the geographical region R can be performed.

As explained above, according to an embodiment, a technique for localizing wireless sensor nodes is provided using aerial photography (i.e., by means of the imaging system 1020) and a radio signal (control signal CS, may also be referred to as a "beacon"). According to an embodiment, this beacon CS is broadcasted by an aircraft towards the observed field of sensor nodes 100. Any node 100 receiving the beacon CS activates a light source (e.g., a Light-Emitting Diode, LED). The emitted light is detected by a camera 1020 at the aircraft and, hence, marks the sensor node on an aerial photo. As the beacon advantageously may synchronize the node's LED 120 with the camera's 1020 shutter release, the LED has to be only active for a very short time. Consequently, the proposed localization method consumes substantially less energy at the nodes 100 than other techniques.

According to further embodiments, the principle according to the embodiments can be extended in several ways. To improve the detection of the sensor nodes 100 by aerial photography, according to an embodiment the LED of the sensor node 100 may operate at a wavelength outside of the visual band (e.g., in the infrared (IR) or ultraviolet spectrum). Different LEDs or different beacons can be used to distinguish different kind of nodes 100. For instance, anchor nodes (having a known geographic position) could use a specific wavelength or could only react to a specific beacon CS. According to an embodiment, the beacon CS may be used further to request specific data (e.g., ID, status), which the nodes transmit via light impulses to a dedicated receiver at the aircraft. Also, according to an embodiment, the transmitted beacon CS can be adjusted in beam and power to localize nodes 100 in specific geographical sectors separately.

In the following paragraphs, further advantageous embodiments are described.

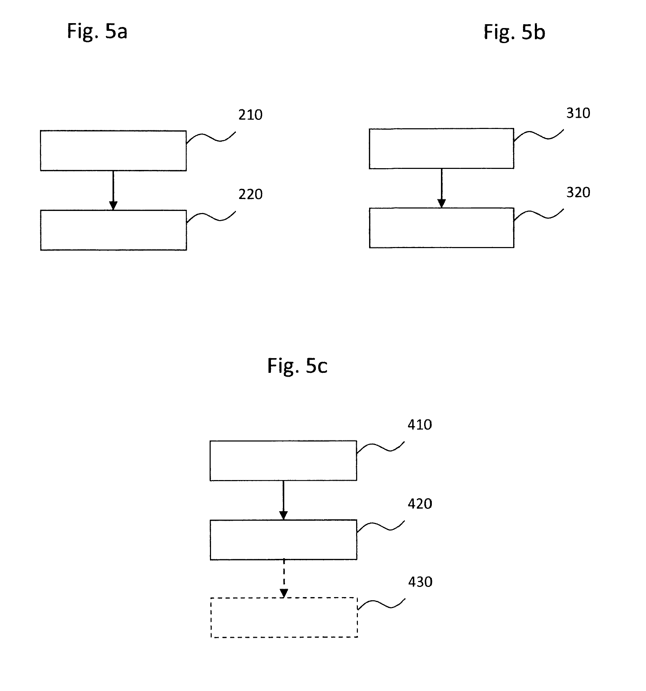

Figure 5a depicts a simplified flow-chart of a method according to the embodiments. In step 210, the control device 1000 (Fig. 3) transmits one or more control signals CS (also referred to as "beacon signals" or "beacons") to trigger any electronic device or sensor node 100, respectively, which receives the control signal CS, to transmit an optical signal OS1. In step 220, the control device 1000 captures at least one image for recording optical signals OS1 transmitted by the sensor nodes 100.

Figure 5b depicts a simplified flow-chart of a further method according to the embodiments. In step 310, the sensor node 100 receives a control signal CS from a control device 1000. In step 320, the sensor node 100 transmits an optical signal OS1 in response to said control signal CS to indicate its position by means of said optical signal OS1.

Figure 5c depicts a simplified flow-chart of a further method according to the embodiments. In step 410, an air vehicle 2000 (Fig. 4a) equipped with a control device 1000 flies over a predetermined geographic range R dropping a plurality of sensor nodes 100 according to the embodiments ("aerial deployment"). In step 420, the air vehicle 2000 flies over the predetermined geographic range R at least one further time, and the control device 1000 performs e.g. the method according to Fig. 5a explained above, i.e. transmitting one or more control signals CS and capturing one or more images which are supposed to comprise optical signals OS1 transmitted by sensor nodes 100 deployed in said predetermined geographic range R. Optionally, in step 430, the control device 1000 determines a geographic position of at least one sensor device 100 based on the so determined data (captured images and/or position of the air vehicle, and the like). According to a further embodiment, said determination 430 may also be performed later in time and/or by a further device, i.e. a control center (not shown) that collects the data determined by the control device.

According to an embodiment, where an air vehicle is used for carrying the control device 1000 (Fig. 2), a flyover phase and a post-processing phase are provided.

According to an embodiment, conventional aircrafts may be extended by the functionality according to the embodiments. For this purpose, at the aircraft 2000 (Fig. 4a), the following components may be added:
- aerial camera system 1020 (e.g., operating in the infrared spectrum; may either be analog or digital camera system)
- "beacon" transmitter with antennas used as primary interface 1010 (Fig. 2) for the control device 1000
- control unit, connected to camera 1020 and transmitter 1010; the control unit (not shown) may e.g. be integrated into the control device 1000 and may e.g. comprise a calculating unit such as digital signal processor or the like
- post-processing unit (optional)
- infrared receiver (optional)

According to an embodiment, at a conventional wireless sensor node the following components may be added:
- Light-Emitting Diode (LED) 122 (Fig. 3), e.g., in the infrared spectrum, and/or an alternative light source, optionally with focusing unit
- Control logic, e.g., extending a conventional transceiver chipset

According to an embodiment, it is proposed that the localization beacon CS is transmitted within the frequency band that is used for ground transmission (e.g., 2.4 GHz ISM band with IEEE 802.15). However, alternative embodiments may add a receiver to the sensor node 100 to perform localization and communication on different bands (i.e., according to an embodiment, the sensor node 100 may comprise more than one radio interface).

According to an embodiment, during a flyover phase (Fig. 4b), beacons CS are transmitted, LEDs 120 (Fig. 1) are activated by the sensor nodes 100 in response to receiving the beacon control signals CS, and pictures are taken by imaging device 1020 (Fig. 2). Although the proposed localization technique is independent of the deployment (aerial, ground, manual, automatic (e.g., by unmanned air/ground vehicles)) it can be efficiently integrated into an aerial deployment process. If the nodes 100 are deployed by air in a first flyover (Figure 3a), the same aircraft 2000 can localize the nodes 100 during a second flyover (Figure 3b).

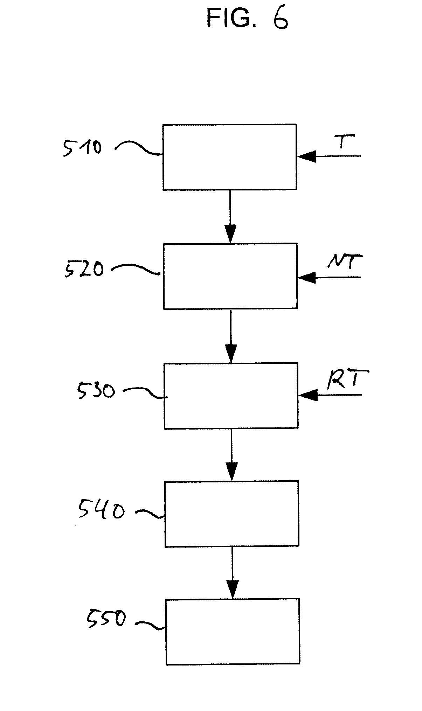

In the following section, a control process at the aircraft 2000 according to an embodiment is described, which is exemplarily depicted by the flow chart of Fig. 6. First, according to an embodiment, a LOC BEACON radio frame is created for transmission of the control signal CS by the control device 1000. To keep the exemplary frame layout compatible with IEEE 802.15.4, the LOC BEACON frame may start with a "FRAME TYPE" subfield. Although this compatibility may be a benefit in some cases, the proposed invention does neither rely on this specific layout nor functions of IEEE 802.15.4.

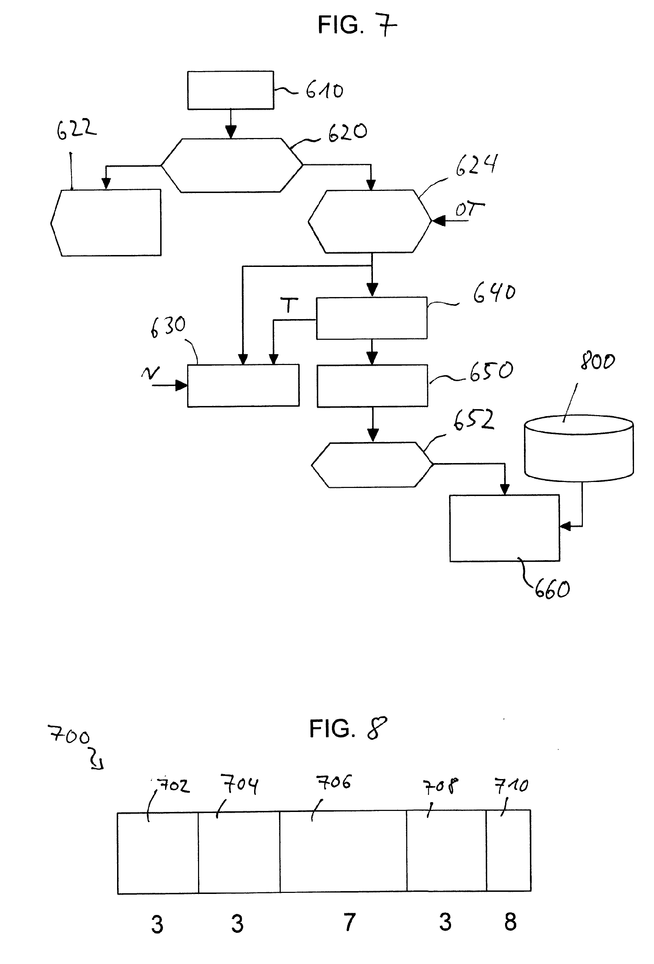

Figure 8 exemplarily depicts a frame scheme of a LOC BEACON radio frame 700 according to an embodiment. Field 702, which according to the present embodiment comprises a length of three bit, represents a frame type. Field 704, which according to the present embodiment comprises a length of three bit, represents a node type. Field 706, which according to the present embodiment comprises a length of seven bit, represents synchronization information "SYNC". Field 708, which according to the present embodiment comprises a length of three bit, represents a request value. Field 710, which according to the present embodiment comprises a length of eight bit, represents a frame check sequence ("FCS").

According to an embodiment, a "shutter time" T for the imaging system 1020 is defined either adaptively according to the current light conditions (from the camera or another photographic system) or as a constant value. Then this value is embedded into a "SYNC" field (e.g., by using a time code), cf. step 510 of Fig. 6. Then, in step 520, the beacon frame for the control signal CS is extended by a NODE TYPE field NT, which allows to activate the LEDs of specific nodes 100 (i.e., by specifying a specific node type NT in said radio frame, only nodes of this specific node type may be supposed to react to the control signal CS comprising such radio frame). For instance, only the LEDs of anchor nodes (i.e., nodes with known position) may be activated. Typical node types, which may be defined according to an embodiment, are summarized in Table 1 below.

| **Table 1** | |
|---|---|
| **NODE TYPE value** | **Type of the nodes** |
| 000 | Ordinary sensor node |
| 100 | Node with known position (Anchor) |
| 010 | Node with Internet uplink (Sink) |
| 001 | Node with large power source (Line) |
| 110 | Anchor and Sink |
| 011 | Sink and Line (e.g., Base Station) |
| 101 | Anchor and Line (e.g., sensor node on vehicle) |
| 111 | Anchor, Sink and Line (e.g., fixed Base Station) |

According to a further embodiment, as an optional extension, the aircraft 2000 or the control device 1000 onboard said aircraft 2000, respectively, may also request data from the sensor nodes 100. To this end, it could specify the type RT of the request data (cf. step 530 of Fig. 6) by a REQUEST signal and then include this signal into the beacon's data field. Typical request signals are summarized in Table 2 below.

| **Table 2** | |
|---|---|
| **REQUEST value** | **Requested Data** |
| 000 | No request |
| 100 | Node ID |
| 010 | Specified DATA, e.g., Sensing data, received signal strength |
| 001 | OWN TYPE |
| 110 | Node ID and DATA |
| 011 | DATA and OWN TYPE |
| 101 | Node ID and OWN TYPE |
| 111 | Node ID, DATA, and OWN TYPE |

After this beacon is created, it is transmitted (by means of interface 1010 (Fig. 2)), cf. step 540, preferably while the camera shutter is released (image is captured by imaging device 1020), cf. step 550, preferably at the same time (i.e., steps 540, 550 may also be performed simultaneously).

According to a further embodiment, conventional functions for aerial photography may be employed to receive the optical signals OS1, OS2 from the nodes 100. According to a further embodiment, this may include functions for detecting overlapping pictures, automatically adjusting the shutter time T and the release time, as well as for attaching the aircraft's location to the picture.

In the following section, a control process at a sensor node 100 according to an embodiment is described, which is exemplarily depicted by the flow chart of Fig. 7.

As soon as the sensor node's physical layer of its interface 110 receives a signal (which may e.g. be a control signal CS from a control device 1000), cf. step 610, it is classified according to its frame identifier, cf. step 620. With IEEE 802.15.4-compliant nodes, the existing frame type subfield in the MAC IEEE 802.15.4 MAC frame would be extended by a LOC BEACON type for localization frames. According to IEEE Computer Society, *IEEE Standard 802.15.4-2011,* 2011, Table 65, such frame can be indicated by any constant binary within [100, 111]. For other radio technology, a similar technique to identify a frame type would be extended or introduced.

If a frame type other than "LOC BEACON" is detected, cf. step 622, the signal is passed to the ordinary transceiver functions (e.g., IEEE 802.15.4's upper PHY functions). However, if "LOC BEACON" is detected, the remaining operation in Figure 7, cf. steps 624 et seq., is performed. First, the NODE TYPE field is extracted and compared to the own pre-assigned type OT, cf. step 624. This condition allows to localize nodes according to their specific properties (e.g., as in Table 1). For instance, according to a further embodiment, anchor nodes can be localized separately by sending beacons CS with a different NODE TYPE field. If the node type matches, the SYNC field is extracted the LED 120 may immediately be activated, cf. step 630, for transmitting the optical signal OS1.

According to a further embodiment, to enable an implicit synchronization of the control device 1000 sending control signals or beacon signals CS, with the sensor nodes 100, it is proposed to activate the LED 120 long enough to assure reliable detection on the image captured by the imaging device 1020. This can e.g. be readily achieved by immediately activating the LED 120 after receiving the beacon CS at the sensor node 100. According to a further embodiment, the detection can be further improved by activating the LED 120 for N many seconds longer than the shutter time T (which may be extracted in step 640 from the received control signal CS. According to a further embodiment, the guard time N can be freely chosen and e.g. depends on the lighting conditions (e.g., day, night), altitude, aircraft speed, sensor density and other parameters.

According to a further embodiment, in case the "LOC BEACON" frame contains a non-empty DATA field (step 650), the sensor node 100 may obtain the requested data in step 652 from data storage 800 (e.g., an internal memory of sensor node 100), construct the DATA field with the requested data, and transmit a modulated light impulse (e.g., in the infrared band) by means of the interface 120 in step 660. According to an embodiment, this transmission 660 may e.g. follow standard infrared protocols such as RC-5 for consumer electronic. The transmission 660 of DATA could be either performed during the T+N LED activation time, or an extra transmission phase could be added to avoid collision with other nodes 100.

According to a further embodiment, a post-processing phase may be provided. In this phase, the nodes' geographical coordinates are derived from the aerial images/pictures. This can be done in a ground station or directly at the aircraft 2000. The latter case leads to faster results and allows to process the digital images from the camera 1020 in a pipeline.

According to a further embodiment, to derive the nodes' coordinates, the coordinates of anchor points may first be discovered in the picture. A transformation matrix may then be calculated using the picture and real-world geographic coordinates of these anchor points. The derived transformation matrix can then be used to convert coordinates from the picture into real-world coordinates.

According to a further embodiment, a method used to determine geographic anchors depends on markers in the aerial photo. For example, if anchor nodes (with known position) were separated from other (non-anchor) nodes by a dedicated beacon CS, an according "anchor picture" may be overlayed with the one or more pictures of ordinary nodes 100. The overlay may e.g. be performed with the help of the coordinates from the aircraft's positioning system, which may be attached to the pictures according to a further embodiment.

According to a further embodiment, if anchor nodes are identified by the wavelength of the used light source 120, a single picture may contain all nodes, i.e. anchor nodes and non-anchor nodes. A node's position may e.g. be defined as a group of pixels that share a certain color/intensity in the captured image. Different colors may e.g. identify different kinds of nodes, e.g., anchor nodes versus normally deployed nodes. According to an embodiment, a node may be "normally deployed" e.g. by aerial deployment. As such, its exact position will not be known. After that, the position of said node may be determined according to the embodiments. And once, said position is known, said node may be considered as an anchor node with a known position, which itself may be used as coordinate/position reference for determination of the position of further nodes.

Instead of or in addition to previously deployed nodes, buildings or other landmarks with a generally known position may be used as an anchor ("node") in the sense of the present invention. I.e., the principle of the embodiments may also be applied by using geographic reference points which are no sensor nodes themselves.

According to a further embodiment, digital image processing such as e.g. edge detection and the like may be employed to determine e.g. coordinates of the corners of a building or other structures to obtain anchor points with high precision in captured images.

According to a further embodiment, after the anchor points are discovered, both their picture coordinates (pixel positions in the captured image) and their real-world coordinates (e.g., geographic coordinates) may be used to determine the transformation matrix necessary to convert coordinates in the picture to real-world geographical coordinates. For instance, according to a further embodiment, the function findHomography() of the software package OpenCV (Internet: http://opencv.org/) can be used for this purpose. At this point any coordinate in the picture, such as the location of an ordinary sensor node, can be converted to real-world coordinate using the derived transformation matrix.

The principle according to the embodiments enables localization of electronic devices 100 or sensor nodes with high energy efficiency.

According to applicant's analysis, based on an assumed electric power consumption of a LED of the interface 120 of a sensor node 100 of about 40 mW (milliwatts) and a camera shutter time of about 10 ms (milliseconds) for the imaging system 1020, the energy consumed at the sensor nodes 100 is obtained as follows.

46.5 mW x 1 ms to receive beacon signal CS + 40 mW x 10 ms to flash LED 120 --> 0.45 mJ (millijoules) of electric energy consumed per node 110.

In contrast, the electrical energy consumption of a conventional system with GPS receiver (e.g., SiRFstarIII type) and a low-power RF transceiver chip of Atmel Corporation (type AT86RF230) is estimated as follows:

The AT86RF230 consumes 46.5 mW during reception and 49.5 mW for transmission at the highest possible transmit power, when a 3 V power source (e.g., 2 AA batteries) is used. A frame cycle of 1ms is assumed. Recent generations of the SiRFstarIII consume 46 mW during operation and require an average time of 35 s to acquire a position (Time To First Fix, TTFF). Under these assumptions the electric energy consumed by the conventional system using a GPS receiver is 46 mW x 35 s to obtain position via GPS + 49.5 mW x 1 ms to transfer position over a single hop -> 1610 mJ of energy consumed per conventional node.

Consequently, the proposed solution according to the embodiments is about 3578 times more energy efficient than using conventional systems such as e.g. GPS within the individual sensor nodes 110. This large difference mainly results from the long time GPS needs to acquire the first position.

According to a further embodiment, different measures may be used to distinguish different groups of sensor nodes 100 from each other. To this end, LEDs 120 of different wavelength or different polarization may be used to generate different light impulses OS1, OS2. As now all nodes in vicinity may generate an impulse OS1, OS2 at the same time (e.g., due to implicit synchronization by received control signal CS), anchor nodes and ordinary nodes may be represented with their optical signals OS1, OS2 on the same captured images.

According to a further embodiment, using the anchor nodes for localization of other nodes alone, makes the localization independent of the aircraft's positioning system - a large benefit when this system is unreliable or not available.

According to a further embodiment, as many nodes 100, 100' may receive and answer to the beacon CS at once, it may be beneficial to extend the nodes' data transmission phase by a Medium Access Control (MAC) protocol. For instance, CDMA/CA or simple repetition (ALOHA) can be used to avoid collisions.

According to a further embodiment, the sensor node 100 (Fig. 1) may comprise an extra weight (not shown) added at a bottom section of its housing to ensure that during aerial deployment the bottom side of the sensor node 100 will face the ground, whereby the optical interface 120 may be arranged facing upwards, i.e. basically perpendicular to a ground surface. This may also be attained by properly designing the weight distribution of the node's 100 components, i.e. without adding extra weights (e.g. by placing heavy batteries in the bottom section, and the like).

According to a further embodiment, alternatively or in addition to the weight distribution / addition of an extra weight, a small parachute may be provided for the node's aerial deployment. Also, alternatively or in addition, the sensor node 100 or its case, may be shaped like a seed of a maple tree or in another aerodynamically suitable fashion that effects the node's landing on ground with a desired orientation, especially of a light source (LED) of the interface 120. Also, alternatively or in addition, the interface 120 of the sensor node 100 may comprise at least two light sources (e.g., LEDs) facing in different directions.

The principle according to the embodiments enables to localize a large number of wireless sensor nodes 100 in short time, while maintaining the nodes' high energy efficiency and low cost per unit. It can be seamlessly integrated into aerial deployment procedures, thus, only adding insignificant time and cost for localization. At the same time, it is flexible enough to localize different groups of nodes 110, 110' and to receive data from the nodes 100 along with their position (e.g., to test their functions and connectivity).

Compared to equipping the nodes with GPS chips, there is a high cost advantage when using the inventive principle. This is a significant aspect, given the desired small cost of a typical wireless sensor node 100 and the large quantities at which they will be deployed.

A further advantage of the principle according to the embodiments is the high energy efficiency attained thereby. The proposed solution is many times more energy efficient than conventional methods such as e.g. GPS-based localization. This impressive energy saving directly extends the lifetime of the wireless sensor network.

Finally, the principle according to the embodiments is very efficient in terms of localization time and labor. It covers large fields R (Fig. 4a) in an instant and can be seamlessly integrated into well-established aerial deployment procedures. Although the positions are only known after post-processing, the overall localization time per node will be still very small. This time can be further reduced by post-processing the imagery data in pipeline directly at the aircraft.

The principle according to the embodiments advantageously enables to deploy WSNs and to efficiently localize single or multiple electronic devices 100, 100' or sensor nodes of said WSNs. The principle according to the embodiments provides a particularly energy efficient solution, adds only an insignificant cost per unit for extending conventional electronic devices or sensor nodes, and allows to localize a large quantity of sensor nodes in an instant.

The description and drawings merely illustrate the principles of the invention. It will thus be appreciated that those skilled in the art will be able to devise various arrangements that, although not explicitly described or shown herein, embody the principles of the invention and are included within its spirit and scope.

Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Electronic device (100), particularly sensor device, comprising a first interface (110) for receiving a control signal (CS) from a remote device (1000), a second interface (120) for transmitting an optical signal, wherein said device (100) is configured to transmit at least one optical signal (OS1) by means of said second interface (120) depending on a control signal (CS) received at said first interface (110).

2. Device (100) according to claim 1, wherein said device (100) is configured to transmit at least one optical signal (OS1) within a predetermined time interval after reception of said control signal (CS).

3. Device (100) according to one of the preceding claims, wherein said first interface (110) comprises a radio interface configured to receive and/or transmit radio frequency, RF, signals.

4. Device (100) according to one of the preceding claims, wherein said second interface (110) is configured to transmit said optical signal (OS1) with at least one spectral component within a visual wavelength band, which particularly ranges from about 380 nanometer to about 780 nanometer and/or within an infrared wavelength band which particularly ranges from about 780 nanometer to about 1 millimeter and/or within an ultraviolet wavelength band which particularly ranges from about 380 nanometer to about 200 nanometer, wherein said second interface (110) preferably comprises one or more light sources of a semiconductor type, for example one or more light emitting diodes.

5. Device (100) according to one of the preceding claims, wherein said device (100) is configured to evaluate said control signal (CS) for at least one command comprised therein.

6. Device (100) according to one of the preceding claims, wherein said device (100) is configured to transmit a modulated optical signal (OS2) in response to said control signal (CS), wherein said modulated optical signal (OS2) preferably comprises information on at least one operational parameter of said device (100) or data, for example sensor data, captured by said device (100).

7. Control device (1000) for an electronic device (100), particularly for an electronic device (100) according to one of the preceding claims, wherein said control device (1000) comprises
- a primary interface (1010) for transmitting a control signal (CS') to said electronic device (100),
- an imaging device (1020) for capturing one or more optical signals (OS1, OS2) from said electronic device (100),
wherein said imaging device (1020) is configured to capture at least one image depending on a control signal (CS') transmitted by said primary interface (1010).

8. Control device (1000) according to claim 7, wherein said imaging device (1020) is configured to capture at least one image within a predetermined time interval after transmission of said control signal (CS').

9. Control device (1000) according to one of the claims 7 to 8, wherein said control device (1000) is configured to associate said at least one image with geographic coordinates.

10. Method of operating an electronic device (100), particularly sensor device, comprising a first interface (110) for receiving a control signal (CS) from a remote device (1000), a second interface (120) for transmitting an optical signal, wherein said device (100) transmits at least one optical signal (OS1) by means of said second interface (120) depending on a control signal (CS) received at said first interface (110).

11. Method according to claim 10, wherein said device (100) transmits at least one optical signal (OS1) within a predetermined time interval after reception of said control signal (CS).

12. Method according to one of the claims 10 to 11, wherein said device (100) evaluates said control signal (CS) for at least one command comprised therein and/or transmits a modulated optical signal (OS2) in response to a control signal (CS), wherein said modulated optical signal (OS2) preferably comprises information on at least one operational parameter of said device (100) or data, for example sensor data, captured by said device (100).

13. Method of operating a control device (1000) for an electronic device (100), particularly for an electronic device (100) according to one of the claims 1 to 6, wherein said control device (1000) comprises
- a primary interface (1010) for transmitting a control signal (CS') to said electronic device (100),
- an imaging device (1020) for capturing one or more optical signals (OS1, OS2) from said electronic device (100),
wherein said imaging device (1020) captures at least one image depending on a control signal (CS') transmitted by said primary interface (1010).

14. Method according to claim 13, wherein said imaging device (1020) captures at least one image within a predetermined time interval after transmission of said control signal (CS').

15. Method according to one of the claims 13 to 14, wherein said control device (1000) associates said at least one image with geographic coordinates.

16. Method according to one of the claims 13 to 15, further comprising the following steps:
- deploying at least one electronic device (100), preferably according to one of the claims 1 to 6, in a predetermined geographic region by terrestrial and/or aerial deployment,
- roaming within said predetermined geographic region, wherein said roaming comprises transmitting one or more control signals (CS') to said at least one electronic device (100) and capturing at least one image of said predetermined geographic region.

17. Air vehicle (2000) comprising at least one control device (1000) according to the claims 7 to 9.

## Amended claims

### Amended claims in accordance with Rule 137(2) EPC.

1. Electronic device (100), particularly sensor device, comprising a first interface (110) for receiving a control signal (CS) from a remote device (1000), a second interface (120) for transmitting an optical signal, wherein said device (100) is configured to transmit at least one optical signal (OS1) to said remote device (1000) by means of said second interface (120) depending on a control signal (CS) received at said first interface (110).

2. Device (100) according to claim 1, wherein said device (100) is configured to transmit at least one optical signal (OS1) within a predetermined time interval after reception of said control signal (CS).

3. Device (100) according to one of the preceding claims,
wherein said first interface (110) comprises a radio interface configured to receive and/or transmit radio frequency, RF, signals.

4. Device (100) according to one of the preceding claims,
wherein said second interface (110) is configured to transmit said optical signal (OS1) with at least one spectral component within a visual wavelength band, which particularly ranges from about 380 nanometer to about 780 nanometer and/or within an infrared wavelength band which particularly ranges from about 780 nanometer to about 1 millimeter and/or within an ultraviolet wavelength band which particularly ranges from about 380 nanometer to about 200 nanometer, wherein said second interface (110) preferably comprises one or more light sources of a semiconductor type, for example one or more light emitting diodes.

5. Device (100) according to one of the preceding claims, wherein said device (100) is configured to evaluate said control signal (CS) for at least one command comprised therein.

6. Device (100) according to one of the preceding claims, wherein said device (100) is configured to transmit a modulated optical signal (OS2) in response to said control signal (CS), wherein said modulated optical signal (OS2) preferably comprises information on at least one operational parameter of said device (100) or data, for example sensor data, captured by said device (100).

7. Control device (1000) for an electronic device (100), particularly for an electronic device (100) according to one of the preceding claims, wherein said control device (1000) comprises
- a primary interface (1010) for transmitting a control signal (CS') to said electronic device (100),
- an imaging device (1020) for capturing one or more optical signals (OS1, OS2) from said electronic device (100),
wherein said imaging device (1020) is configured to capture at least one image depending on said control signal (CS') transmitted by said primary interface (1010).

8. Control device (1000) according to claim 7, wherein said imaging device (1020) is configured to capture at least one image within a predetermined time interval after transmission of said control signal (CS').

9. Control device (1000) according to one of the claims 7 to 8, wherein said control device (1000) is configured to associate said at least one image with geographic coordinates.

10. Method of operating an electronic device (100), particularly sensor device, comprising a first interface (110) for receiving a control signal (CS) from a remote device (1000), a second interface (120) for transmitting an optical signal, wherein said device (100) transmits at least one optical signal (OS1) to said remote device (1000) by means of said second interface (120) depending on a control signal (CS) received at said first interface (110).

11. Method according to claim 10, wherein said device (100) transmits at least one optical signal (OS1) within a predetermined time interval after reception of said control signal (CS).

12. Method according to one of the claims 10 to 11,
wherein said device (100) evaluates said control signal (CS) for at least one command comprised therein and/or transmits a modulated optical signal (OS2) in response to a control signal (CS), wherein said modulated optical signal (OS2) preferably comprises information on at least one operational parameter of said device (100) or data, for example sensor data, captured by said device (100).

13. Method of operating a control device (1000) for an electronic device (100), particularly for an electronic device (100) according to one of the claims 1 to 6, wherein said control device (1000) comprises
- a primary interface (1010) for transmitting a control signal (CS') to said electronic device (100),
- an imaging device (1020) for capturing one or more optical signals (OS1, OS2) from said electronic device (100),
wherein said imaging device (1020) captures at least one image depending on said control signal (CS') transmitted by said primary interface (1010).

14. Method according to claim 13, wherein said imaging device (1020) captures at least one image within a predetermined time interval after transmission of said control signal (CS').

15. Method according to one of the claims 13 to 14,
wherein said control device (1000) associates said at least one image with geographic coordinates.

16. Method according to one of the claims 13 to 15, further comprising the following steps:
- deploying at least one electronic device (100), preferably according to one of the claims 1 to 6, in a predetermined geographic region by terrestrial and/or aerial deployment,
- roaming within said predetermined geographic region, wherein said roaming comprises transmitting one or more control signals (CS') to said at least one electronic device (100) and capturing at least one image of said predetermined geographic region.

17. Air vehicle (2000) comprising at least one control device (1000) according to the claims 7 to 9.
